(19)

**Europäisches Patentamt**
**European Patent Office**
**Office européen des brevets**

(11) **EP 2 378 777 A1**

(12) **EUROPEAN PATENT APPLICATION**
published in accordance with Art. 153(4) EPC

(43) Date of publication:
**19.10.2011 Bulletin 2011/42**

(21) Application number: **10731221.7**

(22) Date of filing: **12.01.2010**

(51) Int Cl.:
*H04N 9/68* (2006.01)     *G06T 1/00* (2006.01)
*G09G 3/20* (2006.01)     *G09G 3/36* (2006.01)
*G09G 5/02* (2006.01)     *H04N 1/46* (2006.01)
*H04N 1/60* (2006.01)     *H04N 9/30* (2006.01)
*H04N 9/64* (2006.01)

(86) International application number:
**PCT/JP2010/050191**

(87) International publication number:
**WO 2010/082552 (22.07.2010 Gazette 2010/29)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **13.01.2009 JP 2009005053**

(71) Applicant: **Sharp Kabushiki Kaisha Osaka-shi, Osaka 545-8522 (JP)**

(72) Inventors:
• **FUJINE Toshiyuki**
  **Osaka-shi**
  **Osaka 545-8522 (JP)**
• **KANDA Takashi**
  **Osaka-shi**
  **Osaka 545-8522 (JP)**
• **GOTOH Toshiyuki**
  **Osaka-shi**
  **Osaka 545-8522 (JP)**
• **KONDOH Naoko**
  **Osaka-shi**
  **Osaka 545-8522 (JP)**

(74) Representative: **Müller - Hoffmann & Partner Patentanwälte Innere Wiener Strasse 17 81667 München (DE)**

(54) **VIDEO DISPLAY DEVICE**

(57)     When a wide color gamut display displays video based on a video signal that complies with a narrower color reproduction range standard, in order to make full use of the feature of the wide color gamut display capable of displaying highly saturated and vivid reds, while eliminating the problem of seeing glaring images in the part of the red color region near the highest brightness and saturation, a video processing circuit (2) reduces and corrects the signal value of the input video signal, which represents the colors within the color range to be corrected, which is within a specified saturation range from the highest saturation to the middle saturation inside a specified hue range centered on the red hue in the color reproduction range (an expanded color reproduction range wider than the sRGB standard color reproduction range) of a liquid crystal panel (4), and which is within a specified brightness range from the highest brightness to the middle brightness inside that range, so that the saturation and brightness thereof change to saturation and brightness within a predetermined middle color range between the expanded color reproduction range and the color reproduction range of the standard to which the input video signal complies.

FIG.1

**Description**

TECHNICAL FIELD

The present invention relates to a video display device that includes a wide color gamut display having a color reproduction range that is wider than a color reproduction range of the sRGB standard.

BACKGROUND ART

A conventional common video display device includes a display that can display a video image using colors in a color reproduction range of the sRGB (standard RGB) standard that is an international standard of IEC (International Electrotechnical Commission) (hereinafter, "standard color reproduction range") (hereinafter, "standard color gamut display"). As opposed to this, a recent video display device, especially, a recent liquid crystal display device presents the image quality whose improvement has advanced, and the range of colors that this recent device can express tends to be extended compared to that of a conventional device.

For example, as to a liquid crystal display device including a backlight using as its light sources LEDs whose luminescent colors have high color purity and a liquid crystal panel (an example of a display) that is illuminated by the backlight, in the case where a video signal governed by the sRGB standard is input into the liquid crystal display device, when video display is executed directly using the video signal, a video image is displayed using colors in a color reproduction range that is wider than the color reproduction range of the sRGB standard (hereinafter, "extended color reproduction range"). Such a display (hereinafter, "wide color gamut display") can display colors that are more vivid (that each have higher saturation) than those of the standard color gamut display.

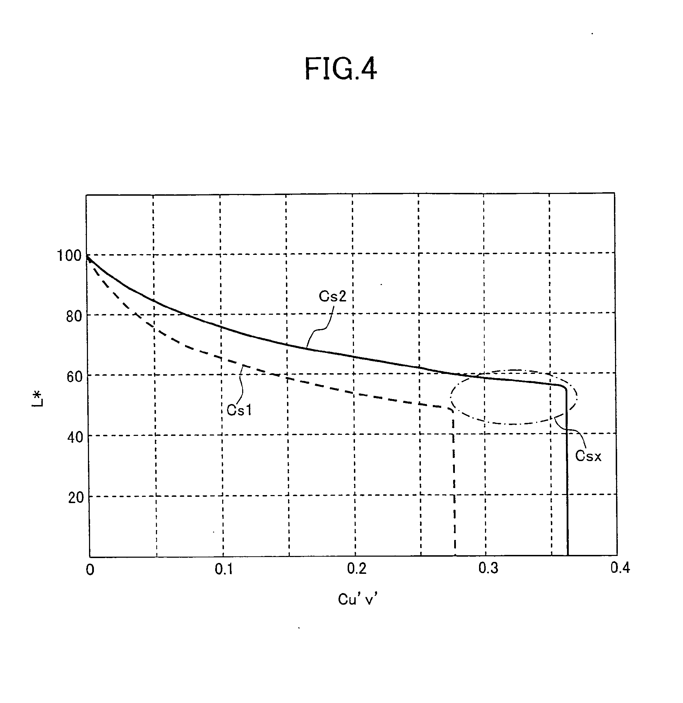

Fig. 4 is a graph of a color reproduction range "Cs1" in the color phase of red that the standard color gamut display can display and a color reproduction range "Cs2" in the color phase of red that the wide color gamut display can display, that are represented on an L*Cu'v' chromaticity diagram for the case where video display is executed based on a video signal that is governed by the sRGB standard. An L*-Cu'v' plane depicted in Fig. 4 corresponds to a cross section (whose axis of ordinate represents Y [lightness]) in a direction of the color phase of red in a Ycbcr coordinate system (a direction of an angle of 109° of polar coordinates).

As depicted in Fig. 4, the color reproduction range Cs2 of the wide color gamut display is wider than the color reproduction range Cs1 of the standard color gamut display and, therefore, the wide color gamut display can display colors each having higher lightness (L*) and saturation (Cu'v') than those of the standard color gamut display.

Therefore, when video display is executed by the wide color gamut display based on a video signal that is governed by the sRGB standard, a video image is presented that very vividly reproduces original colors indicated by the video signal as to red whose saturation is very high.

PRIOR ART DOCUMENT

PATENT DOCUMENT

Patent Document 1: Japanese Laid-Open Patent Publication 8-130655

DISCLOSURES OF THE INVENTION

PROBLEM TO BE SOLVED BY THE INVENTION

However, when video display as to a color region Csx of red whose lightness (L*) and saturation (Cu'v') are close to their maximums is executed by the wide color gamut display based on a video signal that is governed by the sRGB standard, the video image displayed looks glaring like a video image of a luminous portion. Therefore, a problem arises that the image quality thereof is only further degraded.

For such a problem, it can also be considered as described in Patent Document 1 to apply color gamut compression processing to the video signal such that the color range of the displayed colors of the wide color gamut display is shifted from the color range of the extended color reproduction range Cs2 to the color range of the standard color reproduction range Cs1.

However, a problem arises in applying the color gamut compression processing to the video signal that the advantage can not be fully utilized of the wide color gamut display capable of displaying vivid red whose saturation is high. The above problems similarly arise when the color reproduction range of the standard governing the input video signal is narrower than the color reproduction range of the wide color gamut display (the extended color reproduction range Cs2). Therefore, the present invention was conceived in view of the above circumstances and the object thereof is to provide a video display device that can fully utilize the advantage of the wide color gamut display capable of displaying vivid red whose saturation is high and that can solve the problem that a video image looks glaring in the color region of a portion of red whose lightness and whose saturation are close to their maximums, when video display is executed by the wide color gamut display based on a video signal governed by a standard for a color reproduction range that is narrower than that of the wide color gamut display.

MEANS TO SOLVE THE PROBLEM

To achieve the above object, the video display device according to the present invention includes a wide color gamut display, the wide color gamut display displaying a video image in an extended color reproduction range, the extended color reproduction range being a color reproduction range wider than a color reproduction range of an sRGB standard, the video display device correcting an input video signal and inputting the input video signal corrected into the wide color gamut display, the input video signal being governed by a standard (for example, the sRGB standard or an sYCC standard) of a color reproduction range, the color reproduction range being narrower than the extended color reproduction region; and the video display device includes a constituting element described in (1) below.
(1) A signal correcting means that corrects a signal value of the input video signal by shrinking the signal value, the signal value indicating a color in a color range to be corrected, the color range to be corrected being in a predetermined saturation range and in a predetermined lightness range, the predetermined saturation range being from maximal saturation to interim saturation in a predetermined color phase range centering a color phase of red, the predetermined lightness range being from maximal lightness to interim lightness in the predetermined saturation range, the signal correcting means correcting the signal value such that saturation and lightness of the color are varied to saturation and lightness in an interim color range determined in advance between the extended color reproduction range and a color reproduction range of a standard, the standard governing the input video signal.
The interim color range determined in advance is, for example, a range within which an upper limit of lightness with specific saturation is lowered as the specific saturation approaches the maximal saturation, with as a criterion the extended color reproduction range in the color range to be corrected.
According to the present invention, the color correction is executed such that the saturation and the lightness of the color in the color range to be corrected that is a color region of a portion of red whose lightness and whose saturation are close to their maximums are varied to saturation and lightness in the interim color range between the extended color reproduction range and the color reproduction range of the standard that governs the input video signal. Thereby, the problem can be solved that a video image looks glaring in the color region of the portion of red whose lightness and whose saturation are close to their maximums. In addition, colors not in the color range to be corrected are not to be applied with the color correction and, even when the color correction is applied thereto, the color reproduction range is secured that is wider than the color reproduction range of the standard governing the input video signal and, therefore, the advantage can be fully utilized of the wide color gamut display that can display vivid red whose saturation is high.
A typical example of the wide color gamut display is a liquid crystal panel illuminated by a backlight that uses LEDs as its light sources.
An evaluating experiment through the visual sense was executed with a plurality of subjects using as the wide color gamut display a liquid crystal panel illuminated by a backlight that uses LEDs as its light sources and, as a result, preferably, the interim saturation that is a lower limit of the predetermined saturation range is, for example, saturation that is about 70% of the maximal saturation in the color phase of red in the extended color reproduction range.
From the result of the evaluating experiment, preferably, the interim color range determined in advance is a color range whose saturation Cu'v' and whose lightness L* in an L*u'v' color space satisfy (A1) Equation below.

$$L^* \leq -178.8 \times Cu'v' + 105.1 \ ... \ (A1)$$

EFFECT OF THE INVENTION

According to the present invention, the advantage can fully be utilized of a wide color gamut display that can display vivid red whose saturation is high and the problem can be solved that a video image looks glaring in the color region of a portion of red whose lightness and whose saturation are close to their maximums, when video display is executed by the wide color gamut display based on a video signal that is governed by a standard whose color reproduction range is narrower than the color reproduction range of the wide color gamut display (such as the sRGB specification).

BRIEF DESCRIPTION OF DRAWINGS

[Fig. 1] Fig. 1 is a block diagram of the schematic configuration of a liquid crystal display device X that is an example of a video display device according to an embodiment of the present invention.

[Fig. 2] Fig. 2 is a graph of a range of color correction in the liquid crystal display device X, that is represented on an L*Cu'v' chromaticity diagram.

[Fig. 3] Fig. 3 is a graph of a range of colors with which a video image looks glaring in the liquid crystal display device X, that is represented on an L*Cu'v' chromaticity diagram.

[Fig. 4] Fig. 4 is a graph of a color reproduction range in the color phase of red of a standard color gamut display and a color reproduction range in the color phase of red of a wide color gamut display for the case where video display is executed based on a video signal that is governed by the sRGB standard, that are represented on an L*Cu'v' chromaticity diagram.

[Fig. 5] Fig. 5 is a graph of a range of color correction in the liquid crystal display device X, that is represented in a Yrt color space.

EXPLANATION OF LETTERS OR NUMERALS

X :liquid crystal display device
1 :video signal input portion
2 :video processing circuit
3 :liquid crystal driving circuit
4 :liquid crystal panel
5 :LED power supplying circuit
6 :LED backlight
7 :lighting control circuit
8 :main control circuit
81:MPU
82:EEPROM
Ax:designated color region
Ay:color range to be corrected

MODES FOR CARRYING OUT THE INVENTION

An embodiment of the present invention will be described with reference to the accompanying drawings for the present invention to be understood. The embodiment is an example that is acquired by implementing the present invention and is not of a nature to limit the technical scope of the present invention.

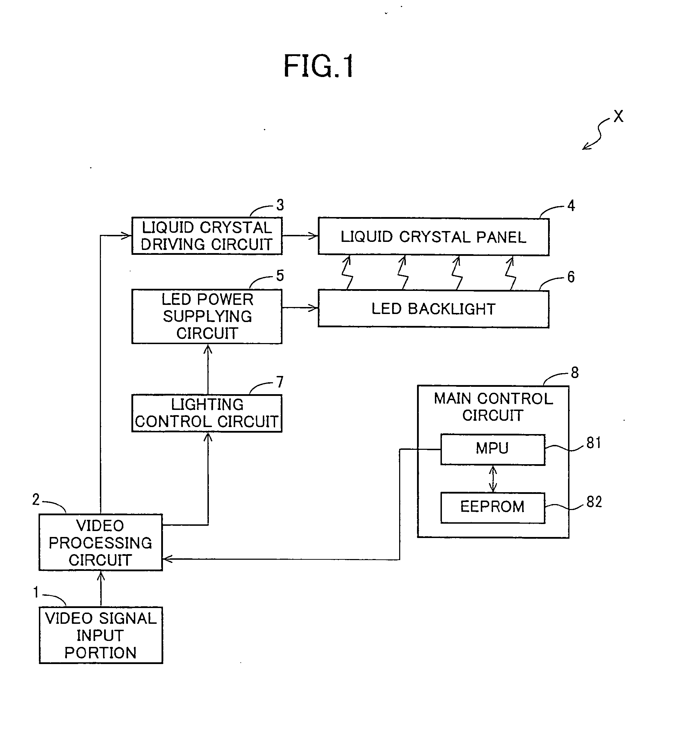

The configuration of a liquid crystal display device X that is an example of a video display device according to the present invention will be described with reference to a block diagram depicted in Fig. 1.

As depicted in Fig. 1, the liquid crystal display device X includes a video signal input portion 1, a video processing circuit 2, a liquid crystal driving circuit 3, a liquid crystal panel 4, an LED power supplying circuit 5, an LED backlight 6, a lighting control circuit 7, a main control circuit 8, etc.

The LED backlight 6 is a backlight that illuminates the liquid crystal panel 4 using LEDs as its light sources. The LEDs are arranged on the back face side of the liquid crystal panel 4 that displays a video image, and each of the LEDs is a light source that is configured by a white-light LED or LEDs (three LEDs) emitting light of three colors of RGB.

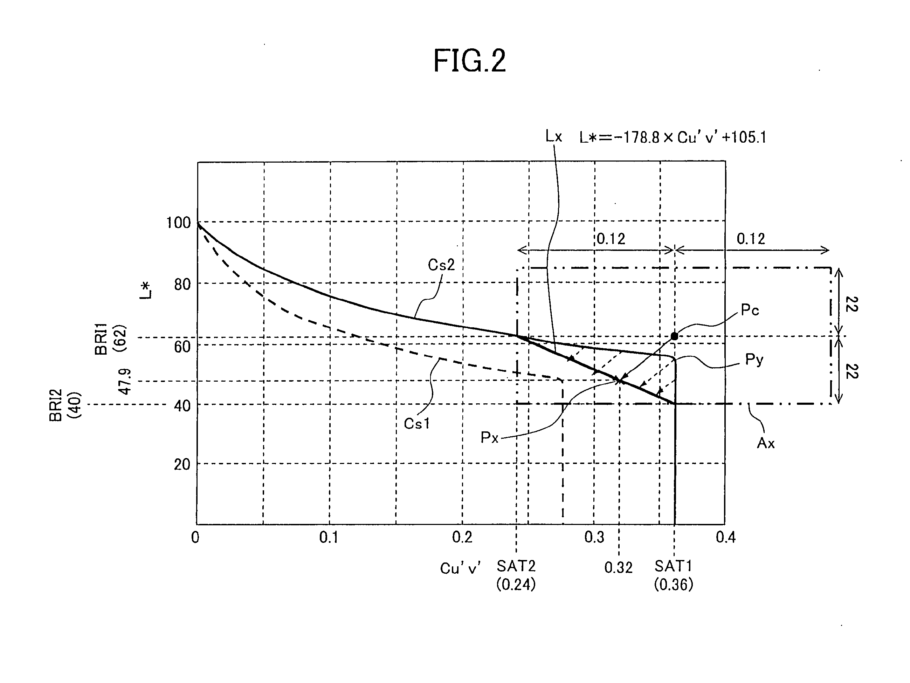

The liquid crystal panel 4 illuminated by the LED backlight 6 is an example of a wide color gamut display that displays a video image using colors in the extended color reproduction range Cs2 (see Figs. 2 to 4) that is wider than the color reproduction range of the sRGB standard (the standard color reproduction range Cs1 in Figs. 2 to 4) when a video signal governed by the sRGB standard is input into the liquid crystal driving circuit 3 through the video signal input portion 1 and the video processing circuit 2. It can be considered that a backlight is employed that uses components other than LEDs as its light sources.

The video signal input portion 1 is an interface for inputting a video signal. The video signal input through this video signal input portion 1 is hereinafter referred to as "input video signal".

The video processing circuit 2 is a circuit that executes various kinds of signal processing based on the input video signal. For example, the video processing circuit 2 executes correction of a signal value of the input video signal in response to an order from the main control circuit 8.

More specifically, when the video processing circuit 2 receives an order from the main control circuit 8 to the effect that the video processing circuit 2 operates in a "standard mode" described later, the video processing circuit 2 executes color gamut compression processing for the input video signal. The color gamut compression processing is, as described in, for example, Patent Document 1, a process of correcting the input video signal such that the color range of displayed colors on the liquid crystal panel 4 (wide color gamut display) is varied from the color range of the extended color reproduction range Cs2 to the color range of the standard color reproduction range Cs1. Thereby, on the liquid crystal panel 4, a video image based on the input video signal that is governed by the sRGB specification is displayed with colors that are substantially same as the displayed colors on the conventional standard color gamut display. The specific content of the color gamut compression processing will not be described in this paragraph.

When the video processing circuit 2 receives an order from the main control circuit 8 to the effect that the video processing circuit 2 operates in a "vivid mode" described later, the video processing circuit 2 corrects the signal value of the input video signal and, thereby, executes the color correction processing of correcting the lightness and the saturation of the color that is indicated by the input display signal. The details of the color correction processing will be described later.

The video processing circuit 2 sequentially produces frame signals that indicate the video luminance (pixel gradation) of the three primary colors (R, G, and B) of each pixel that constitutes an image of one frame in a moving image, based on a video signal to be displayed for one frame that is the input video signal for one frame or a signal acquired after the color correction processing is applied to the input video signal, and the video processing circuit 2 transmits the frame signal to the liquid crystal driving circuit 3.

Every time the input video signal for one frame is input into the video processing circuit 2, the video processing circuit 2 calculates an average luminance level (a so-called APL) as an index value of the video luminance (gradation level) in the video signal to be displayed, and transmits the calculation result to the lighting control circuit 7. The average luminance level is the weighted average value of the pieces of video luminance (gradation levels) of the three primary colors (R, G, and B) of each pixel in the video signal to be displayed for one frame.

The liquid crystal driving circuit 3 is a circuit that, based on the frame signals sequentially transmitted at predetermined intervals from the video processing circuit 2, causes a video image for one frame (an image for one frame) that corresponds to the frame signal, to be sequentially displayed on the liquid crystal panel 4.

More specifically, the liquid crystal driving circuit 3 supplies a gradation signal of a voltage (gradation voltage) that corresponds to the gradation level (that may also be referred to as "luminance level") of each of the three primary colors of R, G, and B to a liquid crystal element of each pixel disposed on the liquid crystal panel. Thereby, the liquid crystal panel 4 displays a video image (moving image) based on the input video signal.

The lighting control circuit 7 determines the luminance of each LED in the LED backlight 6 based on the average luminance level detected (calculated) by the video processing circuit 2. The lighting control circuit 7 determines a control value of the power to be supplied (for example, a duty ratio in PWM control) to each LED in the LED backlight 6 corresponding to the luminance determined, and sets (outputs) the control value in(to) the LED power supplying circuit 5. The LED power supplying circuit 5 supplies electric power corresponding to the control value set by the lighting control circuit 7 to each LED in the LED backlight 6. Thereby, the luminance of the LED backlight 6 is adjusted to the luminance that is determined by the lighting control circuit 7.

The video processing circuit 2 and the lighting control circuit 7 are each realized by, for example, an FPGA or an ASIC.

The LED power supplying circuit 5 is a circuit that adjusts the electric power to be supplied to each LED in the LED backlight 6 according to a control order from the lighting control circuit 7. For example, the LED power supplying circuit 5 adjusts the electric power to be supplied to each LED by the PWM control. Otherwise, it can be considered that the LED power supplying circuit 5 controls the lighting of each LED by adjusting the level of a DC voltage.

The main control circuit 8 includes: an MPU 81 that is an arithmetic means; an EEPROM 82 that is a non-volatile memory; etc. The MPU 81 executes a control program that is stored in a ROM not depicted and, thereby, control processing is executed for each of the constituting elements included in the liquid crystal display device X.

For example, in the main control circuit 8, the MPU 81 executes a process of switching the video display mode according to an operation input through a remote operating device not depicted. The video display mode is an operation mode of the video processing circuit 2.

More specifically, the MPU 81 executes the process of switching between the standard mode and the vivid mode that are the two kinds of video display mode, according to the operation input. An order is output from the MPU 81 to the video processing circuit 2 to the effect that the video processing circuit 2 operates in the video display mode set after the switching.

The standard mode is an operation mode that causes the color gamut compression processing to be applied to the input video signal that is governed by the sRGB standard such that the color range of the displayed colors on the liquid crystal panel 4 (wide color gamut display) is varied from the color range of the extended color reproduction range Cs2 depicted in Fig. 2 to the color range of the standard color reproduction range Cs1.

The vivid mode is an operation mode that causes the color correction processing of correcting the color phase of each color that is indicated by the input video signal, to be executed such that a color drift based on red of interim saturation is solved in the extended color reproduction range Cs2 by correcting the signal value of the input video signal that is governed by the sRGB standard.

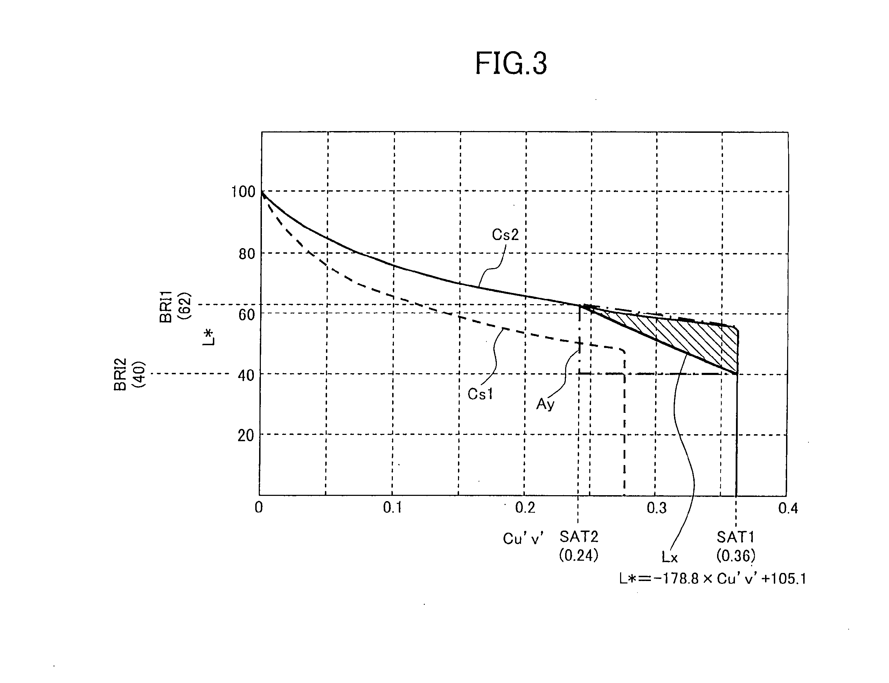

The color correction processing executed in the vivid mode will be described with reference to Figs. 2 and 3. An L*-Cu'v' plane depicted in each of Figs. 2 and 3 corresponds to a cross section (whose axis of ordinate represents Y [lightness]) in a direction in the color phase of red in a Ycbcr coordinate system (a direction of an angle of 109° of polar coordinates).

Similarly to Fig. 4, Figs. 2 and 3 depict the color reproduction range Cs1 in the color phase of red of a display that is governed by the sRGB standard and the color reproduction range Cs2 in the phase of red of the liquid crystal panel 4.

When the liquid crystal panel 4 executes video display for a color region of red whose lightness (L*) and whose saturation (Cu'v') are close to their maximums based on a video signal that is governed by the sRGB standard, the video image thereof looks glaring like a video image of a luminous portion.

A color region that visually looks excellent was researched by conducting an evaluating experiment through the visual sense with a plurality of subjects using the liquid crystal panel 4.

As the result of the evaluating experiment, it turned out that only a video image visually looks excellent of a color region in the inside (a direction for the lightness to be reduced) of the extended color reproduction range Cs2 except a color region (a region defined by the lightness [L*] and the saturation [Cu'v']) represented by oblique lines in Fig. 3. It turned out, in contrast, that a video image of the color region represented by the oblique lines in Fig. 3 looks glaring like a video image of a luminous portion or looks substantially similar to this state and, therefore, the image quality thereof was only further degraded.

The color region represented by the oblique lines in Fig. 3 is a region located on an upper side (a side of the higher lightness L*) of a straight line Lx that is expressed by (B1) Equation below in the extended color reproduction range Cs2.

$$Lx = -178.8 \times Cu'v' + 105.1 \quad ... \quad (B1)$$

The video processing circuit 2 corrects the signal value of the input video signal that indicates the colors in the color region represented by the oblique lines in Fig. 3 by shrinking the signal value such that the lightness and the saturation thereof are varied to the lightness and the saturation in the color region that is located inner than the color region represented by the oblique lines in Fig. 3.

The video processing circuit 2 sets a range to be a color range Ay to be corrected, that is in a saturation range from the maximal saturation SAT1 to interim saturation SAT2 in a predetermined color phase range centering the color phase of red in the extended color reproduction range Cs2 and that is in a lightness range from the maximal lightness BRI1 to interim lightness BRI2 in the saturation range.

The video processing circuit 2 executes signal correction processing of correcting the signal value of the input video signal that indicates the colors in the color range Ay to be corrected by shrinking the signal value such that the saturation (Cu'v') and the lightness (L*) thereof are varied to the saturation and the lightness in an interim color range determined in advance between the extended color reproduction range Cs2 and the color reproduction range Cs1 of the sRGB standard that governs the input video signal.

The interim color range is a range within which the upper limit of the lightness (L*) is lowered (that is, the upper limit of the lightness is lowered toward the right) with specific saturation (Cu'v') as the specific saturation (Cu'v') approaches the maximal saturation SAT1, with as a criteria the extended color reproduction range Cs2 in the color range Ay to be corrected.

The interim saturation SAT2 ($\approx$0.24) that is the lower limit of the saturation range in the color range Ay to be corrected is saturation that is about 70% of the maximal saturation SAT1 ($\approx$0.36) in the color phase of red in the extended color reproduction range Cs2.

More specifically, the interim color range is a color range within which the saturation Cu'v' and the lightness L* in the L*u'v' space satisfy (C1) Equation below.

$$L* \leq -178.8 \times Cu'v' + 105.1 \quad ... \quad (C1)$$

In Fig. 2, a color at a position of Py is a color with the maximal lightness L*, that is acquired for the maximal saturation SAT1 in the color phase of red in the extended color reproduction range Cs2.

Correction processing will be described of a signal value of the input video signal to color-correct a color in a portion of the color region in the extended color reproduction range, in the color region. The correction processing is executed by the video processing circuit 2.

The EEPROM 82 of the main control circuit has in advance parameters for color adjustment stored therein and the parameters for color adjustment are delivered by the MPU 81 to the video processing circuit 2.

The parameters for color adjustment include parameters "yc", "rc", "tc", "yw", "rw", and "tw" concerning designated ranges of the luminance, the saturation, and the color phase to identify a designated color region "Ax" within which colors are adjusted, and reference correction coefficients "kbri", "ksat", and "khue" that are the criteria for the adjustment amounts for the luminance, the saturation, and the color phase.

Parameters concerning the designated ranges of the luminance, the saturation, and the color phase include the central value "yc" of the luminance, the central value "rc" of the saturation, and the central value "tc" of the color phase in the designated color region Ax, and the width "yw" of the luminance, the width "rw" of the saturation, and the width "tw" of the color phase that are taken relative to the central values. The designated color region Ax is a color region that is determined by the designated ranges of the luminance, the saturation, and the color phase that are identified by the parameters yc, rc, tc, yw, rw, and tw.

The coordinates of the center position Pc of the designated color region Ax are determined by the central value yc of the luminance, the central value rc of the saturation, and the central value tc of the color phase.

In the embodiment, the width yw of the luminance, the width rw of the saturation, and the width tw of the color phase are the parameters that represent halves of the full widths ot the luminance, the saturation, and the color phase in the designated color region Ax. However, an example can be considered where the width yw of the luminance, the width rw of the saturation, and the width tw of the color phase are the parameters that represent the full widths of the luminance, the saturation, and the color phase in the designated color region Ax.

A Y value (luminance value), a Cb value (a differential signal value of blue), and a Cr value (a differential signal value of red) of the input video signal are respectively denoted by "Yin", "Cbin", and "Crin".

The video processing circuit 2 calculates polar coordinates (rin, tin) that identify the saturation and the color phase on a Cb-Cr plane of the input video signal based on the Cb value and the Cr value (Cbin, Crin) of the input video signal. The polar coordinates (rin, tin) can be calculated based on a known Cordic (Cordinate Rotation Computer) algorism.

The video processing circuit 2 calculates the deviations ($\Delta$yin, $\Delta$rin, $\Delta$tin) of the color (Yin, rin, tin) of the input video signal relative to the color at the center position Pc, based on (D1) Equation below.

[Eq. 1]

$$\left.\begin{array}{l} \Delta yin = |Y\,in - y\,c| \\ \Delta rin = |r\,in - r\,c| \\ If\ -0.5 \leq (tin - tc) \leq 0.5\ Then\ \Delta tin = |tin - tc| \\ Else\ \Delta tin = 1.0 - |tin - tc| \end{array}\right\} (D1)$$

In (D1) Equation,

$\Delta$yin: the deviation of the luminance of the input video signal relative to the luminance of a core portion

$\Delta$rin: the deviation of the saturation of the input video signal relative to the saturation of the core portion

$\Delta$tin: the deviation of the color phase of the input video signal relative to the color phase of the core portion

Yin: the luminance value of the input video signal (the polar coordinate of the luminance of the input video signal in the Ycbcr color space)

rin: the polar coordinate of the saturation of the input video signal in the Ycbcr color space

tin: the polar coordinate of the color phase of the input video signal in the Ycbcr color space

yc: the polar coordinate (set value) of the luminance of the center position of the designated color region in the Ycbcr color space

rc: the polar coordinate (set value) of the saturation of the center position of the designated color region in the Ycbcr color space

tc: the polar coordinate (set value) of the color phase of the center position of the designated color region in the Ycbcr color space

* Core portion: the center position of the designated color region in the Ycbcr color space

The video processing circuit 2 calculates a weighting coefficient Wyrt for the color adjustment based on (D2) Equation below.

[Eq. 2]

$$\left.\begin{aligned}
&\textbf{If } r\,w > r\,c \text{ and } r\,in < r\,c \\
&\quad \text{Then Wyrt} \\
&= \{1.0 - (\Delta yin/yw)\} \\
&\times \{1.0 - (\Delta rin/rc)\} \\
&\times \{1.0 - (\Delta tin/tw)\} \\
&\quad \text{Else Wyrt} \\
&= \{1.0 - (\Delta yin/yw)\} \\
&\times \{1.0 - (\Delta rin/rw)\} \\
&\times \{1.0 - (\Delta tin/tw)\}
\end{aligned}\right\} \text{(D2)}$$

In (D2) Equation,
Wyrt: the weighting coefficient for the color correction
$\Delta yin$: the deviation of the luminance of the input video signal relative to the luminance of the core portion
$\Delta rin$: the deviation of the saturation of the input video signal relative to the saturation of the core portion
$\Delta tin$: the deviation of the color phase of the input video signal relative to the color phase of the core portion
rc: the polar coordinate (set value) of the saturation of the center position of the designated color region in the Ycbcr color space
yw: a designated value (set value) of the width of the luminance of the designated color region in the Ycbcr color space
rw: a designated value (set value) of the width of the saturation of the designated color region in the Ycbcr color space
tw: a designated value (set value) of the width of the color phase of the designated color region in the Ycbcr color space
* Core portion: the center position of the designated color region in the Ycbcr color space
The video processing circuit 2 calculates (Yout, Cbout, Crout) that are the Y value, the Cb value, and the Cr value acquired after the color adjustment processing is applied to the input video signal, based on (D3) Equation below.

[Eq. 3]

$$\left.\begin{aligned}
&\text{Yout} = yin \times (1.0 + \text{Wyrt} \times kbri) \\
&\text{Cb}' = \text{Cbin} \times (1.0 + \text{Wyrt} \times ksat) \\
&\text{Cr}' = \text{Crin} \times (1.0 + \text{Wyrt} \times ksat) \\
&\quad \text{Cbout} \\
&= \{\text{Cb}' \times \cos(\text{Wyrt} \times khue)\} - \{\text{Cr}' \times \sin(\text{Wyrt} \times khue)\} \\
&\quad \text{Crout} \\
&= \{\text{Cb}' \times \sin(\text{Wyrt} \times khue)\} + \text{Cr}' \times \cos(\text{Wyrt} \times khue)\}
\end{aligned}\right\} \text{(D3)}$$

In (D3) Equation,
Yin: the luminance value of the input video signal
Cbin: the Cb value of the input video signal
Crin: the Cr value of the input video signal
Yout: the luminance value of a video signal acquired after its correction
Cbout: the Cb value of the video signal acquired after the correction
Crout: the Cr value of the video signal acquired after the correction
Wyrt: the weighting coefficient for the color correction
kbri: a correction coefficient (set value) of the luminance
ksat: a correction coefficient (set value) of the saturation
khue: a correction coefficient (set value) of the color phase
(D0) Equation below is an equation that consolidates (D1) to (D3) Equations.

[Eq. 4]

$$
\left.\begin{array}{c}
\Delta yin = |Yin - yc| \\
\Delta rin = |rin - rc| \\
If - 0.5 \leq (tin - tc) \leq 0.5 \; Then \; \Delta tin = |tin - tc| \\
Else \; \Delta tin = 1.0 - |tin - tc| \\
Wyrt \\
= \left\{ 1.0 - \left( \frac{\Delta yin}{yw} \right) \right\} \\
\times \left\{ 1.0 - \left( \frac{\Delta rin}{rw} \right) \right\} \\
\times \left\{ 1.0 - \left( \frac{\Delta tin}{tw} \right) \right\} \\
Yout = yin \times (1.0 + Wyrt \times kbri) \\
Cb' = Cbin \times (1.0 + Wyrt \times ksat) \\
Cr' = Crin \times (1.0 + Wyrt \times ksat) \\
Cbout \\
= \{Cb' \times \cos(Wyrt \times khue)\} - \{Cr' \times \sin(Wyrt \times khue)\} \\
Crout \\
= \{Cb' \times \sin(Wyrt \times khue)\} + \{Cr' \times \cos(Wyrt \times khue)\}
\end{array}\right\} (D0)
$$

In (D0) Equation,

Yin: the luminance value of the input video signal (the polar coordinate of the luminance of the input video signal in the Ycbcr space)

Cbin: the Cb value of the input video signal

Crin: the Cr value of the input video signal

Yout: the luminance value of the video signal acquired after its correction

Cbout: the Cb value of the video signal acquired after the correction

Crout: the Cr value of the video signal acquired after the correction

rin: the polar coordinate of the saturation of the input video signal in the Ycbcr color space

tin: the polar coordinate of the color phase of the input video signal in the Ycbcr color space

yc: the polar coordinate (set value) of the luminance of the center position of the designated color region in the Ycbcr color space

rc: the polar coordinate (set value) of the saturation of the center position of the designated color region in the Ycbcr color space

tc: the polar coordinate (set value) of the color phase of the center position of the designated color region in the Ycbcr color space

yw: a designated value (set value) of the width of the luminance of the designated color region in the Ycbcr color space

rw: a designated value (set value) of the width of the saturation of the designated color region in the Ycbcr color space

tw: a designated value (set value) of the width of the color phase of the designated color region in the Ycbcr color space

kbri: the correction coefficient (set value) of the luminance

ksat: the correction coefficient (set value) of the saturation

khue: the correction coefficient (set value) of the color phase

When the video processing circuit 2 (an example of a signal correcting means) executes the color adjustment processing based on (D1) to (D3) Equations described above, the signal values are corrected as follows of the input video signal that indicate the colors inside the designated color region Ax.

When a color indicated by the signal value of the input video signal is the color of the center position Pc in the designated color region Ax, the weighting coefficient Wyrt for the color correction is Wyrt=1, and the luminance Yin, the saturation rin, and the color phase tin of the color are corrected by the correction amounts that correspond to the reference correction coefficients (kbri, ksat, and khue). The correction amounts (the amounts to be added) for the luminance, the saturation, and the color phase in this case are values that are acquired by multiplying the luminance Yin, the saturation rin, and the color phase tin of the input video signal respectively by the reference correction coefficients kbri, ksat, and khue.

When a color indicated by the signal value of the input video signal is a color other than the color of the center position Pc in the designated color region Ax (another case), the weighting coefficient Wyrt for the color correction becomes closer to zero as the position in the color space of the color indicated by the signal value of the input video signal becomes closer to the border position of the designated color region Ax (becomes more distant from the center position Pc). As a result, the luminance Yin, the saturation rin, and the color phase tin of the color of the signal value of the input video signal are corrected by correction amounts that become smaller as the position of the color of the signal value becomes closer to the border position of the designated color region Ax. The correction amounts are all zero for the signal value of the color at the border position of the designated color region Ax. Therefore, the color continuity (gradation) is secured between that before and that after the correction of the signal value.

In the embodiment, the video processing circuit 2 executes the correction processing of the signal value of the input video signal as above and, thereby, the correction of the signal value that indicates the color in the color range Ay to be corrected by shrinking the signal value.

More specifically, the video processing circuit 2 executes the correction processing of the signal value of the input video signal for the designated color region Ax as depicted in Fig. 2.

The saturation Cu'v', the lightness L*, and the color phase of the color at the center position Pc of the designated color region Ax are, in the extended color reproduction range Cs2, the maximal lightness BRI1 (=62) acquired with the interim saturation SAT2 and the maximal saturation SAT1 (0.36) in the color phase of red, and the color phase of red (the color phase in the direction of the angle of 109° of the polar coordinates in the u'v' plane).

The widths (that each are a half of the full width) of the lightness and the saturation in the designated color region Ax respectively are, in the extended color reproduction range Cs2, a width from interim lightness BRI2 with the maximal saturation SAT1 to the maximal lightness BRI1 with the interim saturation SAT2 in the color phase of red (SAT1-SAT2=22) and a width from the maximal saturation SAT1 to the interim saturation SAT2 in the color phase of red (BRI1-BRI2=0.12). The width (that is a half of the full width) of the color phase of the designated color region Ax is, for example, about 25°. The video processing circuit 2 executes color correction for the designated color region Ax as depicted in Fig. 2 such that the color at the center position Pc thereof is varied to the color at a position Px on the straight line Lx in the color phase of red. The lightness, the saturation, and the color phase of the color at the position Px are (the lightness [L*], the saturation [Cu'v'], and the color phase)=(47.9, 0.32, and 109°). The video processing circuit 2 sets the reference correction coefficients (kbri, ksat, and khue) to execute the color correction.

The video processing circuit 2 executes the signal value correction (correction by shrinking) based on (D1) to (D3) Equations using the parameters for the color adjustment yc, rc, tc, yw, rw, and tw and the reference correction coefficients kbri, ksat, and khue.

An overlapping region between the designated color region Ax and the extended color reproduction range Cs2 depicted in Fig. 2 is a region that includes as its portion the color range Ay to be corrected depicted in Fig. 3.

Therefore, due to the correction processing of the signal value of the input video signal executed by the video processing circuit 2, the signal value of the input video signal that indicates the color in the color range Ay to be corrected is corrected such that the saturation and the lightness thereof are varied to saturation and lightness in an interim color range between the extended color reproduction range Cs2 and the color reproduction range Cs1 of the standard that governs the input video signal (in this case, the sRGB standard) (in a range on the lower side of the straight line Lx).

As a result, when the liquid crystal panel 4 executes video display based on the input video signal that is governed by the standard (the sRGB standard, etc.) of the color reproduction range Cs1 that is narrower than the color reproduction range Cs2 of the liquid crystal panel 4, the problem that a video image in the color region of a portion of red whose lightness and whose saturation are close to their maximums looks glaring can be solved fully utilizing the advantage of the liquid crystal panel 4 that can display vivid red whose saturation is high.

It can also be considered that the video processing circuit 2 executes the correction processing of the signal value of the input video signal as above using a signal value in a Yrt color space.

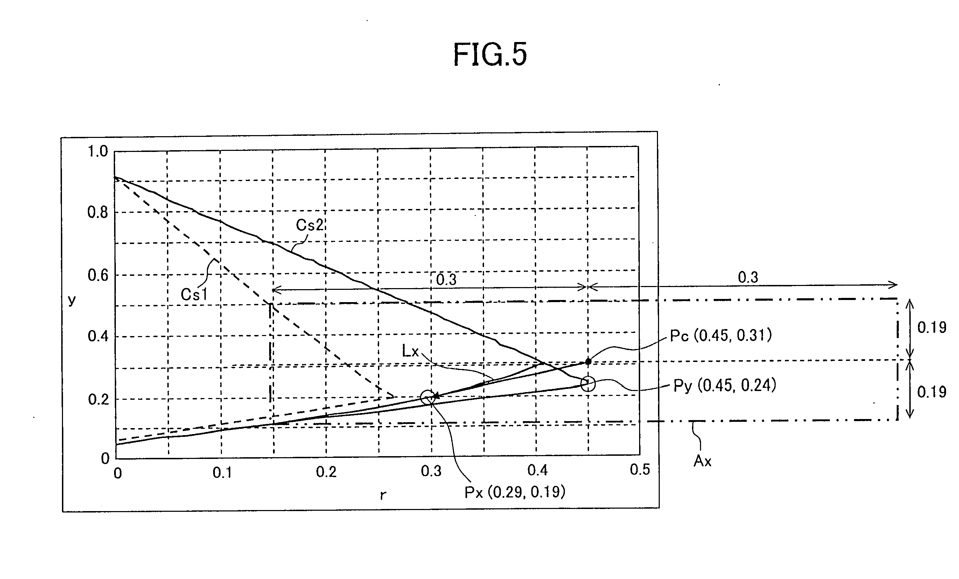

Fig. 5 is a graph of a range of the color correction in the liquid crystal display device X, that is represented in a Yrt color space. Fig. 5 depicts the cross section of the color phase of red in the Yrt color space and is a graph acquired by converting the chromaticity diagram depicted in Fig. 2 into that in the Yrt color space and depicting the conversion result. In Fig. 5, the same reference letters as the reference letters given in Fig. 2 are given to the same colors and the same color ranges as the colors and the color ranges in the chromaticity diagram depicted in Fig. 2.

As depicted in Fig. 5, in the Yrt color space: the coordinates (r, Y) of the center position Pc of the designated color region Ax are (r, Y)=(0.45, 0.31); the width in the r direction of the designated color region Ax is 0.6; and the width in the y direction of the designated color region Ax is 0.38.

The coordinates (r, Y) of the position Px that represents the color acquired after the correction of the color at the center position Pc of the designated color region Ax are (r, Y)=(0.29, 0.19).

In Fig. 5, the value of "t" that represents the color phase is 0.286. In Fig. 5, the coordinates (r, Y) are (r, Y)=(0.45, 0.24) of the position Py of the color of the maximal lightness acquired for the maximal saturation in the color phase of red in the extended color reproduction range Cs2. A curve denoted by "Lx" in Fig. 5 is acquired by converting the straight line Lx depicted in Fig. 2 into a line in the Yrt color space.

As depicted in Fig. 5, when the correction processing of the signal value of the input video signal is executed using the signal value in the Yrt color space, the same actions and the same effects as those of the embodiment can also be acquired.

INDUSTRIAL APPLICABILITY

The present invention is applicable to a video display device.

**Claims**

1. A video display device that includes a wide color gamut display, the wide color gamut display displaying a video image in an extended color reproduction range, the extended color reproduction range being a color reproduction range wider than a color reproduction range of an sRGB standard, the video display device correcting an input video signal and inputting the input video signal corrected into the wide color gamut display, the input video signal being governed by a standard of a color reproduction range, the color reproduction range being narrower than the extended color reproduction region, comprising:

   a signal correcting means that corrects a signal value of the input video signal by shrinking the signal value, the signal value indicating a color in a color range to be corrected, the color range to be corrected being in a predetermined saturation range and in a predetermined lightness range, the predetermined saturation range being from maximal saturation to interim saturation in a predetermined color phase range centering a color phase of red, the predetermined lightness range being from maximal lightness to interim lightness in the predetermined saturation range, the signal correcting means correcting the signal value such that saturation and lightness of the color are varied to saturation and lightness in an interim color range determined in advance between the extended color reproduction range and a color reproduction range of a standard, the standard governing the input video signal.

2. The video display device as defined in claim 1, wherein the interim color range determined in advance is a range within which an upper limit of lightness with specific saturation is lowered as the specific saturation approaches the maximal saturation, with as a criterion the extended color reproduction range in the color range to be corrected.

3. The video display device as defined in claim 1 or 2, wherein
   the wide color gamut display is a liquid crystal panel that is illuminated by a backlight having LEDs as its light sources.

4. The video display device as defined in claim 3, wherein
   the interim saturation that is a lower limit of the predetermined saturation range is saturation that is about 70% relative to the maximal saturation in the color phase of red in the extended color reproduction range.

5. The video display device as defined in claim 3, wherein
   the interim color range determined in advance is a color range whose saturation Cu'v' and whose lightness L* in an L*u'v' color space satisfy (A1) Equation below.

$$L* \leq -178.8 \times Cu'v' + 105.1 \quad \ldots \quad (A1)$$

# FIG.1

X

```
┌─────────────────┐ 3      ┌──────────────────────────┐ 4
│ LIQUID CRYSTAL  │───────▶│   LIQUID CRYSTAL PANEL   │
│ DRIVING CIRCUIT │        └──────────────────────────┘
└─────────────────┘               ▲    ▲    ▲    ▲
                                  │    │    │    │
┌─────────────────┐ 5      ┌──────────────────────────┐ 6
│   LED POWER     │───────▶│      LED BACKLIGHT       │
│   SUPPLYING     │        └──────────────────────────┘
│    CIRCUIT      │
└─────────────────┘
        ▲
        │
┌─────────────────┐ 7      ┌──────────────────────────┐ 8
│    LIGHTING     │        │      MAIN CONTROL        │
│ CONTROL CIRCUIT │        │        CIRCUIT           │
└─────────────────┘        │  ┌────────────────┐      │
        ▲                  │  │      MPU       │──── 81
        │                  │  └────────────────┘      │
┌─────────────────┐ 2      │         ▲↕                │
│     VIDEO       │        │  ┌────────────────┐      │
│  PROCESSING     │        │  │     EEPROM     │──── 82
│   CIRCUIT       │◀───────│  └────────────────┘      │
└─────────────────┘        └──────────────────────────┘
        ▲
        │
┌─────────────────┐ 1
│  VIDEO SIGNAL   │
│     INPUT       │
│    PORTION      │
└─────────────────┘
```

FIG.2

# FIG.3

$$L* = -178.8 \times Cu'v' + 105.1$$

EP 2 378 777 A1

# FIG.4

# FIG.5

EP 2 378 777 A1

| | |
|---|---|
| **INTERNATIONAL SEARCH REPORT** | International application No. |
| | PCT/JP2010/050191 |

**A. CLASSIFICATION OF SUBJECT MATTER**
*H04N9/68*(2006.01)i, *G06T1/00*(2006.01)i, *G09G3/20*(2006.01)i, *G09G3/36* (2006.01)i, *G09G5/02*(2006.01)i, *H04N1/46*(2006.01)i, *H04N1/60*(2006.01)i, *H04N9/30*(2006.01)i, *H04N9/64*(2006.01)i
According to International Patent Classification (IPC) or to both national classification and IPC

**B. FIELDS SEARCHED**

Minimum documentation searched (classification system followed by classification symbols)
H04N9/68, G06T1/00, G09G3/20, G09G3/36, G09G5/02, H04N1/46, H04N1/60, H04N9/30, H04N9/64

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2008-58650 A (Sony Corp.), 13 March 2008 (13.03.2008), entire text; all drawings & US 2008/0055333 A1 | 1-5 |
| A | JP 2002-44677 A (Fujitsu Hitachi Plasma Display Ltd.), 08 February 2002 (08.02.2002), entire text; all drawings & EP 1176834 A2 & US 2002/0012073 A1 & US 2004/0218101 A1 | 1-5 |
| A | WO 99/55074 A1 (Mitsubishi Electric Corp.), 28 October 1999 (28.10.1999), entire text; all drawings & EP 996279 A1 | 1-5 |

☐ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 March, 2010 (17.03.10) | 30 March, 2010 (30.03.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

**Patent documents cited in the description**

- JP 8130655 A